# EUROPÄISCHE PATENTSCHRIFT

(11) **EP 3 030 397 B1**
(45) Veröffentlichungstag und Bekanntmachung des Hinweises auf die Patenterteilung: **04.11.2020**
(21) Anmeldenummer: 14771184.0
(22) Anmeldetag: 08.08.2014
(51) Int. Cl.: B29C 53/84, B29C 53/40, B29C 63/04, B60R 13/02

(54) **VERFAHREN ZUM UMBUGEN EINES RANDES EINER DEKORLAGE, UMBUGANLAGE, VERFAHREN ZUM UMRÜSTEN EINER UMBUGANLAGE UND INNENVERKLEIDUNGSTEIL**
METHOD FOR FOLDING OVER AN EDGE OF A DECORATIVE LAYER, FOLD-OVER SYSTEM, METHOD FOR CONVERTING A FOLD-OVER SYSTEM, AND INTERIOR TRIM PART
PROCÉDÉ DE REMBORDEMENT D'UNE COUCHE DÉCORATIVE, INSTALLATION DE REMBORDEMENT, PROCÉDÉ DE CONVERSION D'UNE INSTALLATION DE REMBORDEMENT ET PIÈCE D'HABILLAGE INTÉRIEUR

(30) Priorität: 08.08.2013 DE 102013013152
(43) Veröffentlichungstag der Anmeldung: 15.06.2016
(73) Patentinhaber: Persico S.p.A., 24027 Nembro (BG) (IT)
(72) Erfinder: FEIL, Jürgen, 83410 Leobendorf (DE); DANDL, Andreas, 83410 Laufen (DE)
(74) Vertreter: Tirloni, Bartolomeo
(86) Internationale Anmeldenummer: PCT/DE2014/000403
(87) Internationale Veröffentlichungsnummer: WO 2015/018391

(56) Entgegenhaltungen:
- DE-A1- 4 308 925
- DE-A1- 19 840 957

## Beschreibung

Die Erfindung betrifft ein Verfahren zum Umbugen eines Randes einer Dekorlage und eine Umbuganlage.

Generell betrifft die vorliegende Offenbarung Verfahren und Vorrichtungen sowie damit hergestellte Bauteile, die im Innenraum von Landfahrzeugen, Wasserfahrzeugen und Luftfahrzeugen zum Einsatz kommen können, insbesondere aber die Bauteile für den Innenraum von herkömmlichen Personenkraftwagen. Rein beispielhaft fallen hierunter Verkleidungsteile im Bereich der Türen, Armaturentafeln, Handschuhkästen oder Mittelkonsolen.

Entsprechende Teile werden im Allgemeinen mit einem Verfahren produziert, bei welchem eine vorzugsweise flexible Materiallage mit einer Oberseite und einer Unterseite auf einen vorzugsweise formstabilen Träger mit einer vorzugsweise dreidimensionalen Oberflächenkontur aufkaschiert werden.

Zum Herstellen von mit einer flexiblen Dekorlage kaschierten Trägerteilen wird im Stand der Technik primär zwischen dem sogenannten Vakuumkaschieren (auch als Folienkaschieren bezeichnet) und dem sogenannten Presskaschieren unterschieden.

Beim Vakuumkaschieren werden in der Regel Kunststofffolien als flexible Materiallagen durch Applikation von Vakuum auf Trägerteile kaschiert. Zur Verbindung zwischen dem Träger und der flexiblen Materiallage dient ein auf den Träger und/oder die flexible Materiallage aufgebrachter Klebstoff.

Die Materiallage selbst weist üblicherweise ein Dekor auf, wobei lederähnliche Narbungen sehr beliebt sind.

Das Presskaschieren kommt in der Regel bei der Verarbeitung von flexiblen Materiallagen zum Einsatz, die entweder nicht vakuumfähig sind, wie beispielsweise Textilien, oder die nicht oder nur bedingt dehnbar sind, wie beispielsweise Leder oder Kunstleder. Hierbei werden der Träger und die flexible Materiallage, die in das Werkzeug eingelegt sind, in einem vordefinierten Pressspalt verpresst bzw. anderweitig gefügt. Auch bei diesem Verfahren wird die Verbindung der Elemente durch auf den Träger und/oder die flexible Materiallage aufgetragenen Klebstoff erzielt.

Vielfach kommt zur Verbindung der zwei Elemente ein thermisch aktivierbarer Klebstoff zum Einsatz, der vorab auf eines oder beide Elemente aufgetragen wurde. Dieser Klebstoff muss vor oder während des Kaschierens aktiviert werden. Der thermisch aktivierbare Klebstoff kann beispielsweise ein Heißkleber sein, auch Hotmelt genannt, aber auch andere thermoaktivierbare Klebstoffe können zum Einsatz kommen, beispielsweise dispergierte Polyurethane.

Dies kann durch Heizen der Kaschierwerkzeuge bzw. deren Formhälften erfolgen, so dass der Klebstoff in der Kleberfuge zwischen dem Trägerteil und der flexiblen Dekorlage durch Kontakt des Trägerteils und der flexiblen Dekorlage mit der beheizten Form aktiviert wird. Dabei erfolgt die Erwärmung über eine gleichzeitige Erwärmung des Trägerteils und der flexiblen Dekorlage.

Alternativ ist es bekannt, die Klebstoffschicht vor dem Zusammenbringen von Trägerteil und flexibler Dekorlage, beispielsweise über Heißluft oder Infrarot, zu erwärmen.

Gegebenenfalls kann es aufgrund einer geringen Anfangshaftung zwischen den Elementen notwendig sein, die Fugentemperatur in der Fuge zwischen der flexiblen Materiallage und dem Trägerteil durch das Kühlen eines oder beider Werkzeuge schnell zur reduzieren.

Die DE 10 2010 003 440 A1 schlägt vor, zum Aufheizen des Klebstoffs unmittelbar in der Kleberfuge Carbon-Nanotubes mit einem sehr direkten Ansprechverhalten als Heizeinrichtung zu verwenden.

Die DE 43 08 925 A1 offenbart ein Verfahren und Vorrichtungen zum Umlegen und Befestigen des am Teilrand überstehenden Bezugsmaterials, insbesondere für Fahrzeuginnenverkleidungsteile. Die bekannten Umbugvorrichtungen sind sehr aufwendig ausgeführt und nur mit Einschränkung bei räumlich geformten Teilen einsetzbar. Für die Befestigung des Überzugsmaterials wird neuerdings ein lösungsmittelfreier und mit Wärme aktivierter Kleber eingesetzt. Mit dem Teilschnitt wird der Klebstoff über eine Heißluftdüse erwärmt und somit aktiviert. Der Umbugschieber fährt über den Teilrand und senkt ab. Hierbei wird das Bezugsmaterial über die Kante geschoben und auf die Teilrückseite verklebt. Das Umbugschiebermodul ist universal ausgeführt und kann um den Teilumfang angeordnet werden. Nur die Umbugleiste wird entsprechend der Teilekontur ausgeführt. Die Hubwege der Umbugleiste sind über Stellschrauben stufenlos einstellbar. Die Vorrichtung eignet sich besonders für das automatische Umbugen von Fahrzeuginnenverkleidungsteilen. Durch die einfache Bauweise der Umbugschiebermodule können somit kostengünstige Vorrichtungen hergestellt werden.

Der vorliegenden Erfindung liegt die Aufgabe zugrunde, dem Stand der Technik eine Verbesserung oder Alternative zur Verfügung zu stellen.

Nach einem ersten Aspekt der vorliegenden Erfindung löst diese Aufgabe ein Verfahren zum Umbugen eines Randes einer Dekorlage um eine Kante eines Trägerteils, wobei zum Umbugen ein Umbugschieber eingesetzt wird und ein Fixiermittel dazu verwendet wird, die Kante der Dekorlage in einer Kleberfuge im umgebugten Zustand zu fixieren, wobei der Umbugschieber zum Fixieren des Randes der Dekorlage mittels eines aktiven Kühlmittels gekühlt wird.

Begrifflich sei Folgendes erläutert:
Die "Dekorlage" kann vor allem Folie, Stoff, Gewebe, Leder, Kunstleder, Fell und desgleichen aufweisen.

Das "Umbugen" soll vor allem eine Umklappbewegung um 90 ° oder um 180 ° sein, wobei auch andere Werte im Einzelfall relevant sein können, vor allem aber Werte größer als 90°.

Das "Trägerteil" kann beliebiger Natur sein. Insbesondere aber ist es Teil einer Innenverkleidung eines Kraftfahrzeugs, wie beispielsweise eines Flugzeugs oder eines 20 Personenkraftwagens oder Lastkraftwagens.

Der "Umbugschieber" ist sehr wichtig für die vorliegende Erfindung: Er kennzeichnet eine Gattung von Umbuganlagen, bei welcher der Umbug nicht vollflächig durch Einpressen in ein Werkzeug erfolgt, sondern bei welcher einzelne, diskrete Elemente, nämlich die Umbugschieber, an den umzulegenden Rand der Dekorlage greifen und dann durch eine mehrdimensionale Bewegung den Rand der Dekorlage um die Kante des Trägerteils falten und dort zum Fixieren anpressen. Im Normalfall ist ein Umbugschieber so gelagert, dass er zumindest zwei verschiedene Bewegungsachsen hat. Oft handelt es sich dabei einerseits um einen Vertikalhub, andererseits um eine horizontale Ausfahrbewegung, wobei in der Praxis auch andere Ausrichtungen anzutreffen sein können, die Berechenbarkeit der Bewegungen aber dann am leichtesten ist, wenn sich die beispielsweise mindestens zwei Freiheitsgrade um 90 ° voneinander unterscheiden.

Das "Fixiermittel" kann vor allem ein Klebstoff sein. Innerhalb der Gruppe der Klebstoffe sei vor allem an thermisch aktivierbare Klebstoffe gedacht, beispielsweise dispergierte Polyurethane oder Hotmelts, wobei Hotmelts in der Fachsprache auch oft als Schmelzklebstoff, Heißklebstoff, Heißkleber oder Heißleim bezeichnet werden. Heißklebstoffe sind meist lösungsmittelfrei und bei Raumtemperatur mehr oder weniger feste Produkte, die im heißen Zustand aktiviert werden und auf die Klebefläche aufgetragen werden oder sich schon dort befinden können und beim Abkühlen eine feste Verbindung herstellen. Insbesondere kommen verschiedene Basispolymere, wie Polyamide, Polyethylen, amorphe Polyalphaolefine, Ethylenvinylacetat-Copolymere, Polyester-Elastomere, Polyurethan-Elastomere, Copolyamid-Elastomere oder Vinylacetat-Copolymere in Betracht, oder Harze oder Wachse, wobei oft Stabilisatoren oder Nukleierungsmittel beigefügt sein können.

Als ein "aktives" Kühlmittel sei ein solches verstanden, welches gezielt Wärmeenergie aus dem Umbugschieber abzieht und hierzu speziell eingesetzt wird. Es muss sich dabei um einen Teil der Umbuganlage handeln. Vor allem sei daran gedacht, dass das aktive Kühlmittel eine Pumpe und ein Kühlfluid aufweist, vor allem eine Flüssigkeit, wobei auch gasförmige Kühlmittel in Betracht kommen, flüssige Kühlmittel aber in der Regel eine höhere Kühlleistung ermöglichen.

Ein bevorzugtes Ausführungsform sieht vor, dass der Umbugschieber mittels des Kühlmittels aus seinem Inneren heraus gekühlt wird.

Bei einer Kühlung aus dem Inneren des Umbugschiebers heraus wird die Wärmeleitfähigkeit des Werkstoffs des Umbugschiebers genutzt. Dies kann ein Metall sein, vor allem ein Metall mit einer hohen Wärmeleitfähigkeit, insbesondere mit einer höheren Wärmeleitfähigkeit als Edelstahl oder Stahl, jedenfalls aber bevorzugt mit einer höheren Wärmeleitfähigkeit als etwa 40 bis 58 W/(m x K), was ungefähr Stahl entspricht, als etwa 240 bis 400 W/(m x K), was ungefähr Kupfer entspricht, mehr als etwa 200 bis 240 W/(m x K), was etwa Aluminium entspricht, jeweils bei 0 °C Umgebungstemperatur. Wenn zumindest in einem Teil des Umbugschiebers Elemente mit sehr hoher Wärmeleitfähigkeit von mehr als 1000 W/(m x K) angeordnet sind, wie beispielsweise Kohlenstoff-Nanoröhren mit etwa 6000 W/(m x K) Wärmeleitfähigkeit, dann besteht eine größere Gestaltungsfreiheit bei der Konstruktion hinsichtlich der Größe und Form des Umbugschiebers und der Position und Kühlleistung des Kühlmittels.

Konstruktiv wird vorgeschlagen, dass das Kühlmittel einen offenen oder geschlossenen Kanal am oder im Umbugschieber aufweist und nutzt, um durch den Kanal ein Fluid zu fördern und/oder eine anderweitige Leitung anzuordnen. So kann beispielsweise daran gedacht sein, dass im Kanal eine elektrische Leitung in Form eines Drahts angeordnet ist, wobei gleichzeitig sogar ein Fluid geführt werden kann, wie beispielsweise ein Kühlfluid.

Wenn ein Kühlfluid durch den Umbugschieber gepumpt wird, dann kann der Umbugschieber vom Kühlfluid durchströmt und dadurch gekühlt werden. Es lässt sich dann mittels eines Reglers oder eines einfachen Steuerers sehr leicht Einfluss auf die Kühlleistung nehmen.

An dieser Stelle sei darauf hingewiesen, dass im Rahmen der hier vorliegenden Patentanmeldung im Sprachgebrauch nicht unbedingt scharf zwischen Steuern und Regeln differenziert wird. Wann immer vom Steuern gesprochen wird, sei auch das Regeln als Sonderfall mit offenbart; wann immer vom Regeln gesprochen wird, sei auch ein Steuern als - mitunter schlechtere - Ausführungsform mit offenbart.

Außerdem sei ausdrücklich darauf hingewiesen, dass im Rahmen der hier vorliegenden Patentanmeldung unbestimmte Artikel wie "ein", "zwei" usw. jeweils als Mindestens-Angaben verstanden sein sollen, also als "mindestens ein...", "mindestens zwei..." usw., sofern sich nicht aus dem jeweiligen Kontext ergibt, dass dort etwa nur "genau ein...", "genau zwei..." usw. gemeint sein sollen.

Um insbesondere einen Heißkleber gut abkühlen zu lassen und eine Fixierwirkung infolge des Abkühlens zu entwickeln, wird vorgeschlagen, dass der Umbugschieber zunächst auf unter 40 °C, bevorzugt auf unter 30 °C, vor allem auf unter 25 °C, gekühlt wird, bevor er vom umgebugten Rand der Dekorlage entfernt wird.

Dies fällt dann besonders leicht, wenn ein Kühlregelkreis vorgesehen ist und das Kühlmittel hinsichtlich seiner Menge und/oder seines Durchsatzes und/oder seiner Kühlleistung und/oder seiner Kühlposition, wie beispielsweise der Position des Durchströmens durch das Werkzeug, geregelt wird.

In einer Regelung kann sehr leicht ein Kühlfluid eingesetzt werden und als Regelwert die Rücklauftemperatur des Kühlfluids gemessen werden, beispielsweise wenn das Kühlfluid das Werkzeug verlässt, vor allem eine Kanalbohrung durch das Werkzeug verlässt und beispielsweise wieder in einen Schlauch eintritt oder im späteren Verlauf, jedoch vor Wiedereintritt in das Werkzeug. In der Praxis hat es sich bei Versuchen des Erfinders gezeigt, dass die Rücklauftemperatur des Kühlfluids bevorzugt auf unter 40°C, vor allem unter 30 °C, bevorzugt auf unter 25 °C, in der Praxis besonders bevorzugt auf etwa 20 °C, geregelt wird.

Nach einem zweiten Aspekt der vorliegenden Erfindung löst die gestellte Aufgabe ein Verfahren, insbesondere ein Verfahren wie vorstehend beschrieben, zum Umbugen eines Randes einer Dekorlage um eine Kante eines Trägerteils, wobei zum Umbugen ein Umbugschieber eingesetzt wird und ein Haltemittel dazu verwendet wird, die Kante der Dekorlage im umgebugten Zustand in einer Kleberfuge zu fixieren, wobei sich das Verfahren dadurch kennzeichnet, dass der Umbugschieber zum Umbugen und/oder zum Fixieren des Randes der Dekorlage mittels eines aktiven Heizmittels geheizt wird.

Der besondere Clou einer solchen Verfahrensdurchführung besteht darin, dass der Umbugschieber beheizt wird, somit also die Wärmeenergie gezielter in den Umbugschieber und die vom Umbugschieber berührten Stellen am umzulegenden Rand der Dekorlage eingesetzt werden kann. Dies führt unmittelbar zu einer gezielteren Einsetzung der aufgewandten Heizenergie. Insbesondere ist es aber auch möglich, das Verfahren so durchzuführen, dass der thermisch aktivierbare Klebstsoff erst in gepresstem Zustand in der Kleberfuge bei umgebugtem Rand durch die Beheizung aktiviert wird.

Wie vorstehend bereits zum Kühlen erläutert worden ist, macht es ebenfalls Sinn, den Umbugschieber mittels des Heizmittels aus seinem Inneren heraus zu heizen, wobei auch hier vorgeschlagen wird, dass das Heizmittel einen offenen oder geschlossenen Kanal im Umbugschieber aufweist.

Wenn ein Fluid eingesetzt wird, dann wird vorgeschlagen, dass dieses durch den Umbugschieber gepumpt wird, so dass der Umbugschieber vom Heizfluid durchströmt und dadurch geheizt wird.

Alternativ oder kumulativ können Heizdrähte oder andere elektrisch aktivierbare Wärmeenergieerzeuger oder beispielsweise magnetische Wärmeenergieerzeuger eingesetzt werden.

Um die Wärmeübertragung zwischen dem Kühlmittel und/oder dem Heizmittel und dem Umbugschieber an dessen Kontaktfläche zum umzulegenden Rand zu verbessern, wird vorgeschlagen, dass als der Umbugschieber ein metallenes Bauelement verwendet wird.

Dies bedeutet nicht zwangsweise, dass der gesamte Umbugschieber aus Metall gefertigt sein muss. Es wird aber vorgeschlagen, dass sich eine isolierungsfreie Verbindung vom Angriffspunkt des Wärme- und/oder Kühlmittels zu der designierten Kontaktfläche mit dem umzubugenden Rand ergibt.

Bei Versuchen des Erfinders hat sich herausgestellt, dass das metallene Bauelement des Umbugschiebers bevorzugt Kupfer und/oder Beryllium aufweist, vor allem eine Legierung aus diesen beiden Werkstoffen.

Der Umbugschieber kann einstückig mit einem offenen oder geschlossenen Kanal ausgebildet sein, wobei sich der Ausdruck "einstückig" auf die Wegstrecke vom Kanal bis zur designierten Greiffläche am Rand der Dekorlage bezieht.

In einem besonders vorteilhaften Verfahren sind ein Heizfluid und ein Kühlfluid vorgesehen und werden alternierend durch den selben Kanal oder durch zwei Kanäle am oder im Umbugschieber gepumpt, um den Umbugschieber und damit den Rand der Dekorlage abwechselnd zu erwärmen und anschließend zu kühlen.

Wenn der Heißkleber erst in der Kleberfuge bei umgebugtem Rand der Dekorlage aktiviert werden soll, dann werden folgende Schritte für ein entsprechendes Umbugverfahren vorgeschlagen:
a) Umbugen des Randes und Pressen des Randes gegen das Trägerteil mittels des Umbugschiebers;
b) Aktivieren des Heizmittels zum Heizen, vor allem des Umbugschiebers, und dadurch zum Aktivieren von Heißkleber in der Kleberfuge;
c) Halten des Randes im gepressten Zustand des thermisch aktivierbaren Klebstoffs;
d) Aktivieren des Kühlmittels zum Abkühlen des Umbugschiebers und somit zum Abkühlen des Klebstoffs, so dass dieser den umgebugten Rand am Trägerteil fixiert; und
e) Lösen des Umbugschiebers vom am Trägerteil fixierten Rand.

Bei einem solche Verfahrensablauf besteht größtmögliche Sicherheit gegen das unbeabsichtigte Verteilen von Klebstoff beispielsweise auf sichtbaren Teilen des Werkstücks, und zwar unabhängig davon, ob das Heizmittel zum Heizen des Umbugschiebers und somit mittelbar des Heißklebers eingesetzt wird oder ob eine Heizeinrichtung, wie beispielsweise konventionell bekannt, dazu eingesetzt wird, den umgebugten Rand und/oder das Trägerteil im Bereich der Kleberfuge zu heizen oder ob, wie aus der DE 10 2010 003 440 A1 bekannt, die Kleberfuge von innen heraus direkt geheizt wird.

Das Umbugen des Randes kann auf einem Temperaturniveau an der Kontaktstelle mit dem Umbugschieber unterhalb einer Aktivierungstemperatur des Heißklebers erfolgen.

Das Heizen kann während der Druckausübung des Umbugschiebers auf den Rand und insbesondere auf den Klebstoff auf das Trägerteil erfolgen. Es versteht sich, dass eine leichte Taktzeitverringerung erreicht werden kann, wenn das Heizen bereits vor dem Aufbringen des Anpressdrucks in der zu fixierenden Position erfolgt.

Analog zu diesen Überlegungen kann es vorteilhaft sein, wenn das Kühlen während der Druckausübung des Umbugschiebers auf den Rand und insbesondere auf den Klebstoff auf das Trägerteil erfolgt.

Um ein vorteilhaftes Verfahren ausüben zu können, wird nach einem dritten Aspekt der hier vorliegenden Erfindung eine Umbuganlage zum Umbugen eines Randes einer Dekorlage um eine Kante eines Trägerteils vorgeschlagen, wobei zum Umbugen ein elektromechanisch angetriebener Umbugschieber vorgesehen ist und die Umbuganlage dazu eingerichtet ist, ein Fixiermittel dazu zu verwenden, die Kante der Dekorlage in einer Kleberfuge in umgebugtem Zustand zu fixieren, wobei sich die Umbuganlage dadurch kennzeichnet, dass sie ein aktives Kühlmittel für den Umbugschieber aufweist und dazu eingerichtet ist, den Umbugschieber zum Fixieren des Randes der Dekorlage mittels des aktiven Kühlmittels zu kühlen.

Wenn ein Kühlfluid vorgesehen ist, dann wird dies bevorzugt in einem Kühlkreislauf geführt.

Wenn ein Heizfluid vorgesehen ist, dann wird dieses bevorzugt in einem Heizkreislauf geführt.

Wenn ein Heizkreislauf und ein Kühlkreislauf vorgesehen sind, dann kann es je nach Gestaltung der Anlage sinnvoll sein, den Kühlkreislauf und den Heizkreislauf seriell anzuschließen. Darunter sei verstanden, dass der Kühlkreislauf und der Heizkreislauf jedenfalls innerhalb des Umbugschiebers ein geteiltes Kanalstück aufweisen, bevorzugt den Umbugschieber durch denselben Kanal durchströmen.

Außerhalb des Umbugschiebers oder zumindest außerhalb des gemeinsamen Kanalstücks im Umbugschieber kann ebenfalls ein gemeinsames Stück Leitung vorgesehen sein, oder aber es wird sogar der zumindest deutlich überwiegende Teil der Leitung gemeinsam genutzt, also entweder vom Kühlkreislauf oder vom Heizkreislauf durchströmt.

Bei einer anderen Anlagenkonstellation kann es sinnvoll sein, den Heizkreislauf und den Kühlkreislauf parallel vorzusehen, was bedeutet, dass zumindest der größte Teil der Leitungsführung außerhalb des Umbugschiebers für den Kühlkreislauf vom Heizkreislauf separat aufgebaut ist, wobei sogar innerhalb des Umbugschiebers zum Teil oder sogar vollständig getrennte Leitungen, vor allem in Form von Kanälen, vorgesehen sein können.

Der Umbugschieber kann eine elektrisch und/oder magnetisch aktivierbares Heizelement aufweisen, wobei in diesem Fall die Umbuganlage bevorzugt dazu eingerichtet ist, das Heizelement zum Umbugen und/oder zum Fixieren zu aktivieren. Elektrisch oder magnetisch aktivierbare Heizelemente sind aus dem Stand der Technik bekannt. Sie können beispielsweise dann zum Einsatz kommen, wenn die Kanalführung durch den Umbugschieber dem Kühlkreislauf vorbehalten bleiben soll, dennoch aber ein Heizmittel am Umbugschieber vorgesehen sein soll, ohne dass zwingend ein weiterer Kanal im Umbugschieber angeordnet sein muss.

Hinsichtlich der Kanäle sei erläutert, dass diese in verschiedensten Verläufen im Umbugschieber angeordnet sein können. Im einfachsten Fall ist ein gerade verlaufender Kanal in Form einer einfachen Bohrung durch den Umbugschieber hindurch vorgesehen. Eine beispielhafte Alternativform kann ein U-Kanal sein, wobei dieser bevorzugt aus mehreren jeweils geraden Einzelbohrungen zusammengesetzt ist, im Falle eines U-Profils bevorzugt von drei Einzelbohrungen, nämlich jeweils einer Bohrung für jeden Schenkel des U.

Um auch von den diskreten Umbugschieber-Angreifstellen entfernte Bereiche des umzubugenden Randes der Dekorlage erwärmen zu können, kann eine Heißluftanlage vorgesehen sein und dazu eingerichtet sein, eine Heizluftströmung auf einen designierten Randbereich eines zum Umbugen aufgenommenen Trägerteils und/oder eines umzubugenden Randes einer Dekorlage zu richten, insbesondere mit einer Vielzahl diskreter Heißluftaustrittsöffnungen und/oder im Wesentlichen trägerteilkonturförmig angeordnet. Dies ist aus dem Stand der Technik bekannt, beispielsweise aus den aktuellen Umbugschieber-Anlagen der Anmelderin. Ein der Bauteilkontur angepasster dreidimensionaler Heizkanal sorgt dort für eine definierte gleichmäßige Erwärmung des Trägerteils zur Aktivierung des Klebstoffes. In Kombination zur hier vorgestellten Erfindung ergibt sich ein besonderer Vorteil.

Als Aufheizmittel für den Rand und/oder einen Kleber in einem Kleberspalt kann auch ein anderes kontaktloses Aufheizmittel vorgesehen sein, wie beispielsweise eine Infrarotheizung mit auf den Rand gerichteten Strahlern.

Der Umbugschieber weist bevorzugt ein thermisches Isolierelement gegenüber seinem Halter an der Umbuganlage auf. Auf diese Weise liegt das Heiz- und/oder Kühlmittel, welches im Umbugschieber angeordnet ist, thermisch isoliert gegenüber dem Halter an der Umbuganlage. Bevorzugt kommt als Isolierelement ein Kunststoff-Bauelement zum Einsatz. Auch eine Querschnittsverjüngung bei metallenem Werkstoff kann aber isolierend wirken.

Um den teilweise sehr komplexen dreidimensionalen umzubugenden Formteilen gerecht werden zu können, wird vorgeschlagen, dass für verschiedene Kantenabschnitte des aufzunehmenden Trägerteils mit umzubugenden Rand einer Dekorlage verschiedene Heiz- und/oder Kühlmittel vorgesehen sind. Auf diese Weise können die verschiedenen Abschnitte entlang des Randes unterschiedlich bearbeitet werden. So kann beispielsweise bei kleinen Radien oder in Eckbereichen, welche sich in der Praxis mechanisch als äußerst schwierig zu fixieren herausstellen, zusätzlich eine konventionelle Umbugmechanik vorgesehen sein, beispielsweise mit einer Heißluftheizung und einem bevorzugt ebenfalls heizbaren, jedenfalls aber kühlbaren Umbugschieber.

Bestehende Umbuganlagen können durch Vorsehen von erfindungsgemäßen Umbugschiebern relativ leicht umgerüstet werden. Nach einem weiteren Aspekt der hier vorliegenden Erfindung löst daher die gestellte Aufgabe ein Verfahren zum Umrüsten einer Umbuganlage mit Umbugschiebern, wobei die Umbuganlage dazu eingerichtet wird, das vorstehend beschriebene Verfahren auszuführen oder wobei die Umbuganlage mit den vorstehend beschriebenen Merkmalen versehen wird.

Es versteht sich, dass die mechanischen Vorteile, welche die Erfindung ermöglicht, sich unmittelbar auf ein Innenverkleidungsteil für ein Kraftfahrzeug erstrecken, welches wie vorstehend beschrieben hergestellt worden ist.

Die Erfindung wird nachstehend anhand eines Ausführungsbeispiels unter Bezugnahme auf die Zeichnung näher erläutert. Dort zeigen
Fig. 1 schematisch eine Umbugschiebereinheit mit einem 3D-Schieberkopf, in einem Schnitt mit der Schnittebene der Bewegungsebene des Schieberkopfes, gemäß dem Stand der Technik,
Fig. 2 schematisch in einer räumlichen Ansicht einen Schnittbereich zwischen zwei Schnittebenen eines Umbugschiebers gemäß der hier vorliegenden Erfindung,
Fig. 3 schematisch in räumlicher Ansicht auf einen Schnitt eine Klebebacke mit U-förmiger Temperierbohrung,
Fig. 4 schematisch in einem räumlichen Blick auf einen Schnitt eine Klebebacke mit einer uniaxialen Temperierbohrung und

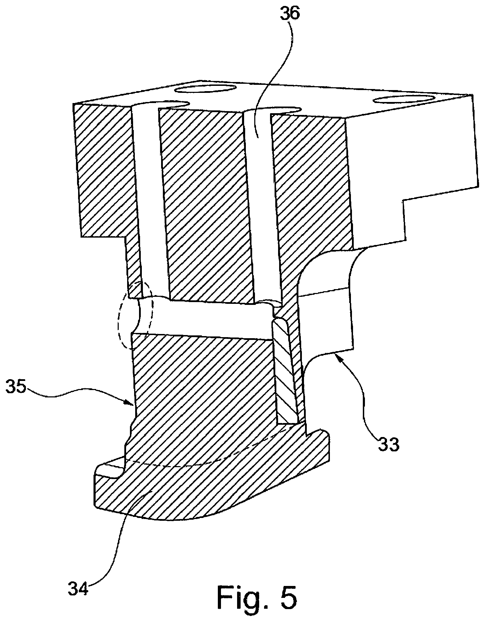

Fig. 5 schematisch in einem räumlichen Blick auf einen Schnitt einen Eckschieber mit U-förmigem Temperierkanal.

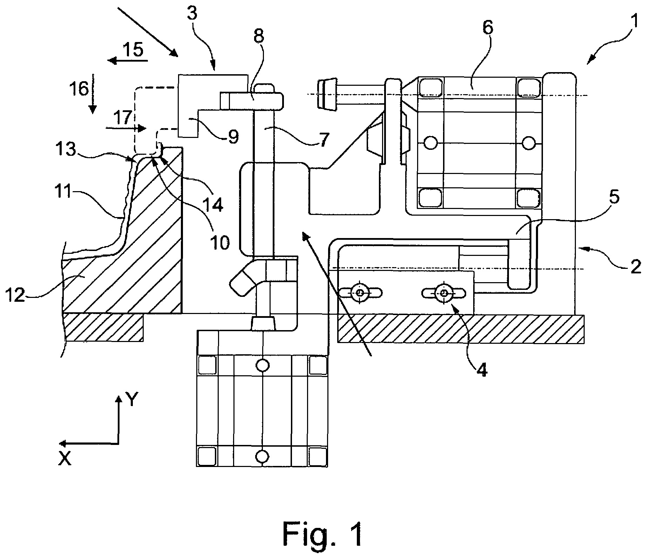

Die Umbugschiebereinheit 1 in Fig. 1 besteht im Wesentlichen aus einer anlagenseitigen Einheit 2 und dem Schieberkopf 3.

Die anlagenseitige Einheit 2 weist einerseits Verbindungsmittel 4 zu einem Maschinenrahmen (nicht dargestellt) der Anlage auf, andererseits einen x-Schlitten 5, angetrieben von einem x-Zylinder 6, sowie einen am x-Schlitten 5 angeordneten y-Zylinder 7. Am y-Zylinder 7 ist letztendlich ein Träger 8 für den Schieberkopf 3 vorhanden. Der Schieberkopf 3 ist am Träger 8 lösbar fixiert.

Die Umbugschiebereinheit ist mit einer Steuerung (nicht dargestellt) an der Umbuganlage wirkverbunden, so dass die Steuerung sowohl den x-Zylinder 6 als auch den y-Zylinder 7 in jeweils beide Achsrichtungen betätigen kann. Die Steuerung kann somit den Schieberkopf 3 in x-y-Richtung beliebig innerhalb der vorgegebenen Maximalbewegungsgrenzen bewegen.

Der Schieberkopf 3 weist auf seiner von dem Befestigungsbereich mit dem Träger 8 abgewandten Seite eine Klebebacke 9 auf. Diese ist zum Eingriff mit dem Werkstück bestimmt:

Im Betrieb der Umbuganlage ist die Umbugschiebereinheit 1 so programmiert, dass sie einen umzubugenden Rand 10 einer Dekorlage 11 auf ein stabiles Trägerteil 12 mit einer eng umzulegenden Biegung 13 andrücken kann. Zwischen dem Rand 10 der Dekorlage 11 und dem Trägerteil 12 bildet sich eine Kleberfuge 14 aus. In der Kleberfuge 14 ist ein Heißkleber vorgesehen. Dieser kann entweder auf die Innenseite des Randes 10 oder auf die Außenseite des Trägerteils 12 oder auf beide aufgebracht gewesen sein, bevor der Rand 10 der Dekorlage 11 mit dem Trägerteil 12 zum Fixieren zusammengebracht worden ist.

Das Aktivieren des Heißklebers erfolgt durch Wärmezufuhr. Es kann beispielsweise über eine Heißluftanlage Temperatur gegen den Kleber gebracht werden, so dass dieser aufweicht und seine klebende Eigenschaft annimmt. Dann wird der Schieberkopf 3 mittels der x- und y-Zylinder 6, 7 in einem ersten Schritt 15 in x-Richtung vorgeschoben, so dass die Klebebacke 9 auf die Druckseite des Trägerteils 12 kommt. In einem zweiten Schritt 16 lässt die Umbugschiebereinheit 1 die Klebebacke 9 in y-Richtung einen Rückschub fahren, und schließlich in einem dritten Schritt 17 den Anpresshub, welcher Druck zwischen die Klebebacke und den Trägerteil 12 bringt, somit auch auf den Rand 10 der Dekorlage 11 und die Kleberfuge 14.

In dieser angepressten Position lässt die Umbugschiebereinheit 1 die Klebebacke 9 verweilen, bis sich eine Anhaftwirkung zwischen dem Rand 10 und dem Trägerteil 12 eingestellt hat. Idealerweise erfolgt dies infolge einer Kühlung gemäß einem möglichen Aspekt der hier vorgestellten Erfindung. Dies verkürzt die Verweilzeit.

Sobald davon ausgegangen werden kann, dass bei einem Entfernen der Klebebacke 9 der Rand 10 noch in der festgeklebten und somit fixierten Position am Trägerteil 12 verbleibt, werden die drei Schritte 15, 16, 17 in umgekehrter Reihenfolge ausgeführt, so dass sich der Schieberkopf 3 wieder in seiner Ausgangsposition befindet und das Trägerteil 12 mit der umgebugten Dekorlage 11 aus der Arbeitsposition und aus der Anlage entnommen werden kann. Sodann kann ein neues Trägerteil mit neuer Dekorlage eingelegt werden.

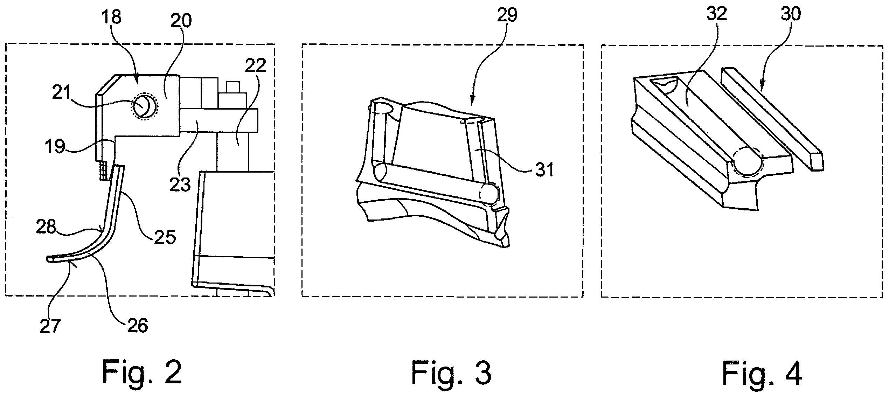

Die erfindungsgemäß ausgerüstete Klebebacke 18 in Fig. 2 besteht im Wesentlichen aus einem Anpressteil 19 und einem Temperierkörper 20.

Im Temperierkörper 20 befindet sich ein beispielsweise gebohrter, erodierter oder gelaserter Kanal 21.

Die erfindungsgemäß ausgerüstete Klebebacke 18 ist aus einem einstückigen Metallelement geformt, welches sowohl den Anpressteil 19 als auch den Temperierkörper 20 aufweist. Das Metall ist bevorzugt von hoher Wärmeleitfähigkeit und weist beispielsweise Kupfer und/oder Beryllium auf.

Gegenüber einem y-Zylinder 22, der wie im Stand der Technik beschaffen sein kann, ist eine wärmedämmende Verbindung mittels eines Kunststoffhalters 23 geschaffen.

Der Anpressteil 19 ist auf seiner Anpressseite 24 bevorzugt dreidimensional konturgefräst und passt sich somit optimal an die Kante 25 des Trägerteils 26 an, um welche herum die Dekorlage (in Fig. 2 nicht dargestellt) gebugt werden soll. Dies führt außerdem zu einer möglichst vollflächigen Temperaturübertragung zwischen der Anpressseite 24 des Anpressteils 19 und dem Trägerteil 26 am diskret von der erfindungsgemäß ausgerüsteten Klebebacke 18 berührten und somit gepressten Bereich. Ein von einer Ansichtsseite 27 des Trägerteils 26 um die Kante 25 hin zu der im späteren Einsatz des Trägerteils 26 verborgen liegende Rückseite 28 kann daher perfekt mit Heißklebstoff angepresst werden.

Bereits während des Umbiegens des Randes der Dekorlage um die Kante 25 herum, alternativ erst später, jedenfalls aber während des Anpressens des umgebugten Randes um die Kante 25, oder alternativ nur vor dem Umbugen des Randes um die Kante 25, kann eine heiße Flüssigkeit durch den Kanal 21 gepumpt werden. Dies führt zu einer unterstützten Aktivierung des Heißklebstoffes.

Bereits während des Umbiegens um die Kante 25 herum, alternativ erst nach dem Anpressen des umgebugten Randes um die Kante 25 auf die Rückseite 28, kann eine Kühlflüssigkeit durch den Kanal 21 gepumpt werden, was zu einem Erstarren des Heißklebers führt.

Wenn die Kühlflüssigkeit durch den Kanal 21 gepumpt wird, kann regelmäßig die Verweilzeit der erfindungsgemäß ausgerüsteten Klebebacke 18 verkürzt werden, ohne dass befürchtet werden muss, dass sich der umgebugte Rand aus seiner fixierten Position abhebt, wenn der Anpressdruck seitens der erfindungsgemäß ausgerüsteten Klebebacke 18 nachgelassen wird, vor allem dann, wenn die Klebebacke 18 zurückgefahren wird, um das Werkstück zur Entnahme freizugeben.

Ein erster alternativer Umbugschieber 29 in Fig. 3 weist drei jeweils lineare Bohrungen auf, welche insgesamt einen U-förmigen Kanal 31 ergeben, welcher ebenfalls sowohl für Kühlmittel als auch für Heizmittel verwendbar ist.

Im zweiten alternativen Umbugschieber 30 ist ein linearer Kanal 32 vorgesehen.

Ein Umbugschieber mit einem Kanal kann auch dadurch erzeugt werden, dass gefräste oder anderweitig eingebrachte Kanäle oder Kanalteilumfänge in einzelnen Werkzeugstücken liegen und die Stücke anschließend dichtend zusammengebracht werden.

Bei einem Eckschieber 33 kann dasselbe Prinzip angewendet werden: eine mit einer Ecke 34 oder zumindest einem engen Radius geformte Klebebacke 35 ist ebenfalls in direkter Wirkverbindung mit einem hier beispielsweise U-förmigen Kanal 36.

### Bezugszeichen

- 1: Umbugschiebereinheit
- 2: Anlagenseitige Einheit
- 3: Schieberkopf
- 4: Verbindungsmittel
- 5: x-Schlitten
- 6: x-Zylinder
- 7: y-Zylinder
- 8: Träger
- 9: Klebebacke
- 10: Rand
- 11: Dekorlage
- 12: Trägerteil
- 13: Biegung
- 14: Kleberfuge
- 15: 1. Schritt
- 16: 2. Schritt
- 17: 3. Schritt
- 18: Erfindungsgemäß ausgerüstete Klebebacke
- 19: Anpressteil
- 20: Temperierkörper
- 21: Kanal
- 22: y-Zylinder
- 23: Kunststoffhalter
- 24: Anpressseite
- 25: Kante
- 26: Trägerteil
- 27: Ansichtsseite
- 28: Rückseite
- 29: Erster alternativer Umbugschieber
- 30: Zweiter alternativer Umbugschieber
- 31: U-förmiger Kanal
- 32: Linearer Kanal
- 33: Eckschieber
- 34: Ecke
- 35: Klebebacke
- 36: Kanal

## Patentansprüche

1. Verfahren zum Umbugen eines Randes (10) einer Dekorlage (11) um eine Kante (25) eines Trägerteils (26),
- wobei zum Umbugen ein Umbugschieber (29, 30) eingesetzt wird und ein Fixiermittel dazu verwendet wird, die Kante (25) der Dekorlage (11) in einer Kleberfuge (14) im umgebugten Zustand zu fixieren, und ein Haltemittel dazu verwendet wird, die Kante (25) der Dekorlage (11) im umgebugten Zustand in einer Kleberfuge (14) zu fixieren,
- wobei der Umbugschieber (29, 30) zum Fixieren des Randes (10) der Dekorlage (11) mittels eines aktiven Kühlmittels gekühlt wird, und der Umbugschieber (29, 30) zum Umbugen und/oder zum Fixieren des Randes (10) der Dekorlage (11) mittels eines aktiven Heizmittels geheizt wird.

2. Verfahren nach Anspruch 1,
***dadurch gekennzeichnet,***
**dass** der Umbugschieber (29, 30) mittels des Kühlmittels aus seinem Inneren heraus gekühlt wird, wobei bevorzugt das Kühlmittel einen offenen oder geschlossenen Kanal (21, 31, 32, 36) am oder im Umbugschieber (29, 30) aufweist, wobei bevorzugt ein Kühlfluid durch den Umbugschieber (29, 30) gepumpt wird, sodass der Umbugschieber (29, 30) vom Kühlfluid durchströmt und dadurch gekühlt wird.

3. Verfahren nach einem der vorstehenden Ansprüche,
***dadurch gekennzeichnet,***
**dass** der Umbugschieber (29, 30) zum Umbugen und/oder zum Fixieren des Randes (10) der Dekorlage (11) mittels eines aktiven Heizmittels geheizt wird, und zwar mittels des Heizmittels aus seinem Inneren heraus geheizt wird.

4. Verfahren nach Anspruch 3,
***dadurch gekennzeichnet,***
**dass** das Heizmittel in einem offenen oder geschlossenen Kanal (21, 31, 32, 36) im Umbugschieber (29, 30) angeordnet ist, wobei bevorzugt ein Heizfluid durch den Umbugschieber (29, 30) gepumpt wird, sodass der Umbugschieber (29, 30) vom Heizfluid durchströmt und dadurch geheizt wird.

5. Verfahren nach einem der vorstehenden Ansprüche,
***dadurch gekennzeichnet,***
**dass** für den Umbugschieber (29, 30) ein metallenes Bauelement verwendet wird, wobei das metallene Bauelement Kupfer und/oder Beryllium aufweisen kann.

6. Verfahren nach einem der vorstehenden Ansprüche,
***dadurch gekennzeichnet,***
**dass** der Umbugschieber (29, 30) einstückig mit einem offenen oder geschlossenen Kanal (21, 31, 32, 36) ausgebildet ist.

7. Verfahren nach einem der vorstehenden Ansprüche,
***dadurch gekennzeichnet,***
**dass** sich das Kühlmittel und das Heizmittel desselben Mediums zum Kühlen und Heizen bedienen, insbesondere einer Flüssigkeit, wobei ein Heizfluid und ein Kühlfluid vorgesehen sein können und dann alternierend durch denselben Umbugschieber (29, 30) gepumpt werden, bevorzugt durch denselben Kanal (21, 31, 32, 36) am oder im Umbugschieber (29, 30).

8. Verfahren nach einem der vorstehenden Ansprüche,
***dadurch gekennzeichnet,***
**dass** folgende Schritte durchgeführt werden:
a. Umbugen des Randes (10) und Pressen des Randes (10) gegen das Trägerteil (26) mittels des Umbugschiebers (29, 30);
b. Aktivieren des Heizmittels zum Heizen, vor allem des Umbugschiebers (29, 30), und dadurch zum Aktivieren von thermisch aktivierbarem Klebstoff in der Kleberfuge (14);
c. Halten des Randes (10) im gepressten Zustand des thermisch aktivierbaren Klebstoffs;
d. Aktivieren des Kühlmittels zum Abkühlen des Umbugschiebers (29, 30) und somit zum Abkühlen des thermisch aktivierbaren Klebstoffs, sodass dieser den umgebugten Rand (10) am Trägerteil (26) fixiert;
e. Lösen des Umbugschiebers (29, 30) vom am Trägerteil (26) fixierten Rand (10).

9. Verfahren nach einem der vorstehenden Ansprüche,
***dadurch gekennzeichnet,***
**dass** das Umbugen des Randes (10) auf einem Temperaturniveau an der Kontaktstelle mit dem Umbugschieber (29, 30) unterhalb einer Aktivierungstemperatur des thermisch aktivierbaren Klebstoffs erfolgt.

10. Verfahren nach einem der vorstehenden Ansprüche,
***dadurch gekennzeichnet,***
**dass** das Heizen während Druckausübung des Umbugschiebers (29, 30) auf den Rand (10) und insbesondere auf den thermisch aktivierbaren Klebstoff auf das Trägerteil (26) erfolgt.

11. Verfahren nach einem der vorstehenden Ansprüche,
***dadurch gekennzeichnet,***
**dass** das Kühlen während Druckausübung des Umbugschiebers (29, 30) auf den Rand (10) und insbesondere auf den Klebstoff auf das Trägerteil (26) erfolgt.

12. Umbuganlage zum Umbugen eines Randes (10) einer Dekorlage (11) um eine Kante (25) eines Trägerteils (26), wobei zum Umbugen ein elektromechanisch angetriebener Umbugschieber (29, 30) vorgesehen ist und die Umbuganlage dazu eingerichtet ist, ein Fixiermittel dazu zu verwenden, die Kante (25) der Dekorlage (11) in einer Kleberfuge (14) im umgebugten Zustand zu fixieren, wobei die Umbuganlage ein aktives Kühlmittel für den Umbugschieber (29, 30) aufweist und dazu eingerichtet ist, den Umbugschieber (29, 30) zum Fixieren des Randes (10) der Dekorlage (11) mittels des aktiven Kühlmittels zu kühlen, und ein Kühlkreislauf für ein Kühlfluid vorgesehen ist.
***dadurch gekennzeichnet,***
**dass** ein Heizkreislauf für ein Heizfluid vorgesehen ist und der Umbugschieber (29, 30) ein elektrisch und/oder magnetisch aktivierbares Heizelement aufweist und dass die Umbuganlage dazu eingerichtet ist, das Heizelement zum Umbugen und/oder zum Fixieren zu aktivieren.

13. Umbuganlage nach Anspruch 12,
***dadurch gekennzeichnet,***
**dass** eine Heißluftanlage vorgesehen und dazu eingerichtet ist, eine Heißluftströmung auf einen designierten Randbereich eines zum Umbugen aufgenommenen Trägerteils (26) mit umzubugendem Rand (10) einer Dekorlage (11) zu richten, insbesondere mit einer Vielzahl diskreter Heißluftaustrittsöffnungen und/oder im Wesentlichen trägerteilkonturförmig angeordnet, oder dass ein anderes kontaktloses Aufheizmittel für den Rand (10) und/oder einen Kleber in einem Kleberspalt vorgesehen ist.

14. Umbuganlage nach einem der Ansprüche 12 oder 13,
***dadurch gekennzeichnet,***
**dass** der Umbugschieber (29, 30) ein thermisches Isolierelement gegenüber seinem Halter an der Umbuganlage aufweist.

15. Umbuganlage nach einem der Ansprüche 12 bis 14,
***dadurch gekennzeichnet,***
**dass** für verschiedene Kantenabschnitte eines aufzunehmenden Trägerteils (26) mit umzubugendem Rand (10) einer Dekorlage (11) verschiedene Heiz- und/oder Kühlmittel vorgesehen sind, bevorzugt allerdings für mindestens einen Kantenabschnitt ein Heiz- und ein Kühlmittel, welche sich desselben Mediums bedienen.

## Claims

1. A method for folding over an edge (10) of a decorative layer (11) around a border (25) of a carrier part (26),
- wherein a fold-over slider (29, 30) is deployed for folding over and a fixing means is used to fix the border (25) of the decorative layer (11) in a glue joint (14) in folded-over state and a holding means is used to fix the border (25) of the decorative layer (11) in a folded-over condition in a glue joint (14),
- wherein the fold-over slider (29, 30) for fixing the edge (10) of the decorative layer (11) is cooled by means of an active cooling means, and the fold-over slider (29, 30) for folding over and/or for fixing the edge (10) of the decorative layer (11) is heated by an active heating means.

2. The method according to claim 1,
**characterized in that**
the fold-over slider (29, 30) is cooled from the inside thereof outwards by the cooling means, in which the cooling means preferably has an open or closed channel (21, 31, 32, 36) on or in the fold-over slider (29, 30), in which a cooling fluid is preferably pumped through the fold-over slider (29, 30), so that the cooling fluid passes through the fold-over slider (29, 30) and the latter is thus cooled.

3. The method according to one of the preceding claims,
**characterized in that**
the fold-over slider (29, 30) for folding over and/or for fixing the edge (10) of the decorative layer (11) is heated by an active heating means, namely by the heating means from the inside thereof outwards.

4. The method according to claim 3,
**characterized in that**
the heating means is arranged in an open or closed channel (21, 31, 32, 36) in the fold-over slider (29, 30), in which a heating fluid is preferably pumped through the fold-over slider (29, 30), so that heating fluid passes through the fold-over slider (29, 30) and the latter is thus heated.

5. The method according to one of the preceding claims,
**characterized in that**
for the fold-over slider (29, 30) a metal component is used, in which the metal component can have copper and/or beryllium.

6. The method according to one of the preceding claims,
**characterized in that**
the fold-over slider (29, 30) is made integrally with an open or closed channel (21, 31, 32, 36).

7. The method according to one of the preceding claims,
**characterized in that**
the cooling means and the heating means use the same medium, particularly a fluid in which a heating fluid and a cooling fluid can be provided and are then pumped alternatingly through the same fold-over slider (29, 30), preferably through the same channel (21, 31, 32, 36) on or in the fold-over slider (29, 30).

8. The method according to one of the preceding claims,
**characterized in that**
the following steps are carried out:
a. folding over the edge (10) and pressing the edge (10) against the carrier part (26) by means of the fold-over slider (29, 30);
b. activating the heating means for heating, above all the fold-over slider (29, 30), and thus for activating thermally activatable glue in the glue joint (14);
c. holding the edge (10) in the pressed condition of the thermally activatable glue;
d. activating the cooling means for cooling the fold-over slider (29, 30) and thus for cooling the thermally activatable glue, so that this fixes the folded-over edge (10) on the carrier part (26);
e. loosening the fold-over slider (29, 30) from the edge (10) fixed to the carrier part (26).

9. The method according to one of the preceding claims,
**characterized in that**
the edge (10) is folded over at a temperature level on the contact position with the fold-over slider (29, 30) below an activation temperature of the thermally activatable glue.

10. The method according to one of the preceding claims,
**characterized in that**
the heating occurs during exercise of the pressure of the fold-over slider (29, 30) on the edge (10) and particularly on the thermally activatable glue on the carrier part (26).

11. The method according to one of the preceding claims,
**characterized in that**
the cooling occurs during exercise of the pressure of the fold-over slider (29, 30) on the edge (10) and particularly on the glue on the carrier part (26).

12. A fold-over system for folding over an edge (10) of a decorative layer (11) around a border (25) of a carrier part (26), in which an electromechanically driven fold-over slider (29, 30) is provided for folding over and the fold-over system is configured to use a fixing means to fix the border (25) of the decorative layer (11) in a glue joint (14) in folded-over state, in which the fold-over system has an active cooling means for the fold-over slider (29, 30) and is configured to cool the fold-over slider (29, 30) for fixing the edge (10) of the decorative layer (11) by the active cooling means and a cooling circuit is provided for a cooling fluid,
**characterized in that**
a heating circuit is provided for a heating fluid and the fold-over slider (29, 30) has an electrically and/or magnetically activatable heating element and the fold-over system is configured to activate the heating element for folding over and/or for fixing.

13. The fold-over system according to claim 12,
**characterized in that**
a hot air system is provided and configured to direct a hot air stream to a designed edge region of a carrier part (26) received for folding over with an edge (10) to be folded over of a decorative layer (11), particularly with a plurality of discrete hot air outlet ports and/or essentially arranged in the form of a carrier part contour so that another contactless warming up means is provided for the edge (10) and/or a glue in a glue slot is provided.

14. The fold-over system according to any one of claims 12 or 13, **characterized in that**
the fold-over slider (29, 30) has a thermal isolating element in relation to the holder thereof on the fold-over system.

15. The fold-over system according to any one of claims 12 to 14, **characterized in that**
for different border sections of a carrier part (26) to be received with an edge (10) to be folded over of a decorative layer (11) different heating and/or cooling means are provided, anyway preferably for at least one border portion a heating and a cooling means that use the same medium.

## Revendications

1. Procédé de rembordement d'un bord (10) d'une couche décorative (11) autour d'une arête (25) d'une pièce support (26),
- dans lequel, pour le rembordement, un coulisseau de rembordement (29, 30) est inséré et un moyen de fixation est utilisé pour fixer l'arête (25) de la couche décorative (11) dans un joint de colle (14) à l'état de rembordement, et un moyen de retenue est utilisé pour fixer l'arête (25) de la couche décorative (11) à l'état de rembordement dans un joint de colle (14),
- dans lequel le coulisseau de rembordement (29, 30) est refroidi pour fixer le bord (10) de la couche décorative (11) à l'aide d'un moyen de refroidissement actif, et le coulisseau de rembordement (29, 30) est chauffé pour le rembordement et/ou la fixation du bord (10) de la couche décorative (11) à l'aide d'un moyen de chauffage actif.

2. Procédé selon la revendication 1,
**caractérisé en ce que**
le coulisseau de rembordement (29, 30) est refroidi de l'intérieur à l'aide du moyen de refroidissement, dans lequel de préférence le moyen de refroidissement comporte un canal ouvert ou fermé (21, 31, 32, 36) sur ou dans le coulisseau de rembordement (29, 30), dans lequel de préférence un fluide de refroidissement est pompé à travers le coulisseau de rembordement (29, 30), de sorte que le coulisseau de rembordement (29, 30) est parcouru par le fluide de refroidissement et est ainsi refroidi.

3. Procédé selon l'une des revendications précédentes,
**caractérisé en ce que**
le coulisseau de rembordement (29, 30) est chauffé pour le rembordement et/ou la fixation du bord (10) de la couche décorative (11) à l'aide d'un moyen de chauffage actif, à savoir, il est chauffé de l'intérieur à l'aide d'un moyen de chauffage.

4. Procédé selon la revendication 3,
**caractérisé en ce que**
le moyen de chauffage est agencé dans un canal ouvert ou fermé (21, 31, 32, 36) dans le coulisseau de rembordement (29, 30), dans lequel de préférence un fluide de chauffage est pompé à travers le coulisseau de rembordement (29, 30), de sorte que le coulisseau de rembordement (29, 30) est parcouru par un fluide de chauffage et est ainsi réchauffé.

5. Procédé selon l'une des revendications précédentes,
**caractérisé en ce que**
pour le coulisseau de rembordement (29, 30) un élément de construction en métal est utilisé, dans lequel l'élément de construction en métal peut comporter du cuivre et/ou du béryllium.

6. Procédé selon l'une des revendications précédentes,
**caractérisé en ce que**
le coulisseau de rembordement (29, 30) est réalisé en une seule pièce avec un canal ouvert ou fermé (21, 31, 32, 36).

7. Procédé selon l'une des revendications précédentes,
**caractérisé en ce que**
le moyen de refroidissement et le moyen de chauffage utilisent le même moyen pour refroidir ou chauffer, en particulier un liquide, dans lequel un fluide de chauffage et un fluide de refroidissement peuvent être prévus et dans lequel ils sont ensuite pompés alternativement à travers le même coulisseau de rembordement (29, 30), de préférence à travers le même canal (21, 31, 32, 36) sur ou dans le coulisseau de rembordement (29, 30).

8. Procédé selon l'une des revendications précédentes,
**caractérisé en ce que**
les étapes suivantes sont exécutées:
a. remborder le bord (10) et presser le bord (10) contre la pièce support (26) à l'aide du coulisseau de rembordement (29, 30);
b. activer le moyen de chauffage pour chauffer avant tout le coulisseau de rembordement (29, 30), et ainsi pour activer l'adhésif activable thermiquement dans le joint de colle (14);
c. retenir le bord (10) à l'état pressé de l'adhésif activable thermiquement;
d. activer le moyen de refroidissement pour refroidir le coulisseau de rembordement (29, 30) et donc pour refroidir l'adhésif activable thermiquement, de sorte que celui-ci fixe le bord rembordé (10) à la pièce support (26);
e. détacher le coulisseau de rembordement (29, 30) du bord (10) fixé à la pièce support (26).

9. Procédé selon l'une des revendications précédentes,
**caractérisé en ce que**
le rembordement du bord (10) a lieu à un niveau de température au point de contact avec le coulisseau de rembordement (29, 30) au-dessous d'une température d'activation de l'adhésif activable thermiquement.

10. Procédé selon l'une des revendications précédentes,
**caractérisé en ce que**
le chauffage a lieu pendant l'exercice de la pression du coulisseau de rembordement (29, 30) sur le bord (10) et, en particulier, sur l'adhésif activable thermiquement sur la pièce support (26).

11. Procédé selon l'une des revendications précédentes,
**caractérisé en ce que**
le refroidissement a lieu pendant l'exercice de la pression du coulisseau de rembordement (29, 30) sur le bord (10) et, en particulier, sur l'adhésif sur la pièce de support (26).

12. Installation de rembordement pour remborder un bord (10) d'une couche décorative (11) autour d'une arête (25) d'une pièce support (26), un coulisseau de rembordement actionné de manière électromécanique (29, 30) étant prévu pour le rembordement et l'installation de rembordement étant installée pour utiliser un moyen de fixation pour fixer l'arête (25) de la couche décorative (11) dans un joint de colle (14) à l'état de rembordement, l'installation de rembordement comportant un moyen de refroidissement actif pour le coulisseau de rembordement (29, 30) et étant installée pour refroidir le coulisseau de rembordement (29, 30) pour fixer le bord (10) de la couche décorative (11) à l'aide du moyen de refroidissement actif, et un circuit de refroidissement étant prévu pour un fluide de refroidissement,
**caractérisée en ce**
**qu'**un circuit de chauffage est prévu pour un fluide de chauffage et le coulisseau de rembordement (29, 30) comporte un élément de chauffage activable de manière électrique et/ou magnétique et en ce que l'installation de rembordement est installée pour activer l'élément de chauffage pour remborder et/ou pour fixer.

13. Installation de rembordement selon la revendication 12,
**caractérisée en ce**
**qu'**une installation à air chaud est prévue et installée pour diriger un courant d'air chaud sur une zone du bord désignée d'une pièce support reçue pour le rembordement (26) avec le bord à remborder (10) d'une couche décorative (11), en particulier avec une pluralité de buses à air chaud discrètes et/ou agencée essentiellement sous la forme du contour de la pièce support, ou en ce qu'un autre moyen de chauffage sans contact est prévu pour le bord (10) et/ou une colle dans une fente de collage.

14. Installation de rembordement selon l'une des revendications 12 ou 13,
**caractérisée en ce que**
le coulisseau de rembordement (29, 30) comporte un élément d'isolation thermique par rapport à son support à l'installation de rembordement.

15. Installation de rembordement selon l'une des revendications 12 à 14,
**caractérisée en ce que**
pour plusieurs parties d'arête d'une pièce support devant être reçue (26) avec le bord à remborder (10) d'une couche décorative (11), plusieurs moyens de chauffage et/ou de refroidissement sont prévus, de préférence toutefois pour au moins une partie d'arête, un moyen de chauffage et un moyen de refroidissement sont prévus, qui utilisent le même moyen.
